# EUROPEAN PATENT APPLICATION

(11) **EP 4 691 584 A1**
(43) Date of publication of application: **11.02.2026**
(21) Application number: 25193780.1
(22) Date of filing: 04.08.2025
(51) Int. Cl.: A63F 13/655, A63F 13/213, A63F 13/86, A63F 13/87

(54) **INFORMATION PROCESSING METHOD, INFORMATION PROCESSING SYSTEM, TERMINAL, AND PROGRAM**

(30) Priority: 07.08.2024 JP 2024131117
(71) Applicant: Nintendo Co., Ltd., Kyoto 601-8501 (JP)
(72) Inventor: OIWA, Ryota, Kyoto, 601-8501 (JP); KOBAYASHI, Masayoshi, Kyoto, 601-8501 (JP); OOMORI, Toshiaki, Kyoto, 601-8501 (JP); FUJITA, Akifumi, Kyoto, 601-8501 (JP); KAKINUMA, Kentaro, Kyoto, 601-8501 (JP)
(74) Representative: Bardehle Pagenberg Partnerschaft mbB Patentanwälte Rechtsanwälte

(57) **Abstract**

An information processing method includes performing data communication among a plurality of terminals belonging to a common group, the plurality of terminals including a first terminal and a second terminal, obtaining a camera image captured by a camera corresponding to at least one terminal belonging to the common group, setting at the second terminal in accordance with a user operation, restriction on display of the camera image captured by a camera corresponding to at least a terminal other than the second terminal, performing game processing in accordance with a user operation at the first terminal and outputting a first game image and first information, and determining a manner of display of the first game image at the second terminal based on the setting of restriction on display and the first information.

## Description

The present disclosure relates to an information processing method, an information processing system, a terminal, and a program.

### INTRODUCTION

Game processing using a camera image has been known (for example, Japanese Patent Laying-Open No. 2013-048924).

### SUMMARY

In handling a camera image, occurrence of a situation unintended by a user is preferably suppressed.

(Configuration 1) An information processing method according to one embodiment includes performing data communication among a plurality of terminals belonging to a common group, the plurality of terminals including a first terminal and a second terminal, obtaining a camera image captured by a camera corresponding to at least one terminal belonging to the common group, setting, at the second terminal, in accordance with a user operation, restriction on display of a camera image captured by a camera corresponding to at least a terminal other than the second terminal, performing game processing in accordance with a user operation at the first terminal and outputting a first game image and first information, and determining a manner of display of the first game image at the second terminal based on the setting of restriction on display and the first information.

According to Configuration 1, when restriction, at one terminal, on display of a camera image captured by a camera corresponding to at least a terminal other than the one terminal has been set, a manner of display of a game image transmitted from another terminal can be determined based on the first information, and hence occurrence of a situation unintended by the user can be suppressed.

(Configuration 2) In Configuration 1, the first game image may be generated using a first camera image captured by a first camera corresponding to at least the first terminal. According to Configuration 2, as the first game image is generated using the first camera image, communication through a game can be promoted.

(Configuration 3) In Configuration 1 or 2, the performing game processing may include setting a flag when using the first camera image. The first information may be based on the flag. According to Configuration 3, use of the first camera image can reliably be known based on the first information.

(Configuration 4) In any of Configurations 1 to 3, while the game processing is being performed, a camera image captured by a camera corresponding to a terminal in the common group other than the first terminal may be obtainable. The first game image may be generated by using the obtained camera image. According to Configuration 4, since the game image is generated by using the camera image captured by the camera corresponding to another terminal, communication with the use of the camera image can be performed, for example, in playing the same communication game among a plurality of users.

(Configuration 5) In any of Configurations 1 to 4, the information processing method may further include performing a chat using the camera image among the plurality of terminals. The setting restriction on display may include restricting use of the camera image in performing the chat. According to Configuration 5, by setting restriction on display, display or the like of a camera image can be restricted also in performing a chat.

(Configuration 6) In any of Configurations 1 to 5, the information processing method may further include obtaining the camera image while the chat is being performed. The game processing being performed may obtain the camera image obtained in the chat. According to Configuration 6, the camera image obtained while the chat is being performed can be used also for generation of a game image.

(Configuration 7) In any of Configurations 1 to 6, the information processing method may further include showing a game image generated as a result of game processing performed in accordance with a user operation at at least one terminal among the plurality of terminals, at at least another terminal among the plurality of terminals. According to Configuration 7, based on a game image generated as a result of game processing performed at a certain terminal, communication with a user of another terminal can be performed.

(Configuration 8) In any of Configurations 1 to 7, the first terminal may include a first communication unit, and the first terminal may be configured to transmit to the second terminal, a data stream based on the first game image and the first information. According to Configuration 8, the first game image and the first information can successively be updated in relatively short cycles.

(Configuration 9) In any of Configurations 1 to 8, when image data of the first game image includes a flag, the data stream may include data generated from the image data with the flag having been removed and data indicating the removed flag. According to Configuration 9, image data generated as a result of game processing can be converted to an appropriate data stream.

(Configuration 10) In any of Configurations 1 to 9, the data stream may be in conformity with an H.264 (MPEG-4 AVC) standard. According to Configuration 10, data can efficiently be transmitted.

(Configuration 11) In any of Configurations 1 to 10, when restriction on display of the camera image has been set at the second terminal, the manner of display of the first game image based on the first information may include avoiding showing the first game image including the camera image or showing the first game image such that at least the camera image is indistinct. According to Configuration 11, while restriction on display of a camera image has been set at a certain terminal, unintended display of a game image including the camera image can be suppressed.

(Configuration 12) According to another embodiment, an information processing system configured to perform the information processing method according to any of Configurations 1 to 11 is provided.

(Configuration 13) An information processing method according to yet another embodiment includes obtaining a game image and first information, the game image being outputted as a result of game processing performed by another terminal belonging to a common group, obtaining a camera image captured by a camera corresponding to at least one terminal belonging to the common group, setting, at the terminal, in accordance with a user operation, restriction on display of a camera image captured by a camera corresponding to at least a terminal other than the terminal, and determining a manner of display of the game image at the terminal based on the setting of restriction on display and the first information.

(Configuration 14) According to yet another embodiment, a terminal configured to perform the information processing method according to Configuration 13 is provided.

(Configuration 15) According to yet another embodiment, a program causing one or more computers to perform the information processing method according to Configuration 13 is provided.

The foregoing and other objects, features, aspects, and advantages of the present disclosure will become more apparent from the following detailed description of the present disclosure when taken in conjunction with the accompanying drawings.

### BRIEF DESCRIPTION OF THE DRAWINGS

Fig. 1 shows an exemplary illustrative non-limiting drawing illustrating an exemplary configuration of an information processing system according to the present embodiment.
Fig. 2 shows an exemplary illustrative non-limiting drawing illustrating an exemplary hardware configuration of a terminal according to the present embodiment.
Fig. 3 shows an exemplary illustrative non-limiting drawing illustrating an exemplary hardware configuration of a management server according to the present embodiment.
Fig. 4 shows an exemplary illustrative non-limiting drawing illustrating an exemplary software configuration of the terminal according to the present embodiment.
Fig. 5 shows an exemplary illustrative non-limiting drawing illustrating an exemplary flowchart showing exemplary game processing at the terminal according to the present embodiment.
Fig. 6 shows an exemplary illustrative non-limiting drawing illustrating an exemplary flowchart showing exemplary processing in data transmission at the terminal according to the present embodiment.
Fig. 7 shows an exemplary illustrative non-limiting drawing for illustrating exemplary processing of game image data and a camera use flag at the terminal according to the present embodiment.
Fig. 8 shows an exemplary illustrative non-limiting drawing illustrating an exemplary flowchart showing exemplary processing in data reception at the terminal according to the present embodiment.
Fig. 9 shows an exemplary illustrative non-limiting drawing illustrating an exemplary flowchart showing exemplary processing for generating a chat screen at the terminal according to the present embodiment.
Figs. 10A and 10B show exemplary illustrative non-limiting drawings for illustrating an exemplary chat screen generated in the information processing system according to the present embodiment.
Figs. 11A to 11C show exemplary illustrative non-limiting drawings for illustrating an exemplary manner in which a camera image is indistinct in the information processing system according to the present embodiment.

### DETAILED DESCRIPTION

The present embodiment will be described in detail with reference to the drawings. The same or corresponding elements in the drawings have the same reference characters allotted and description thereof will not be repeated.

### [A. Exemplary System Configuration]

An exemplary configuration of an information processing system according to the present embodiment will initially be described.

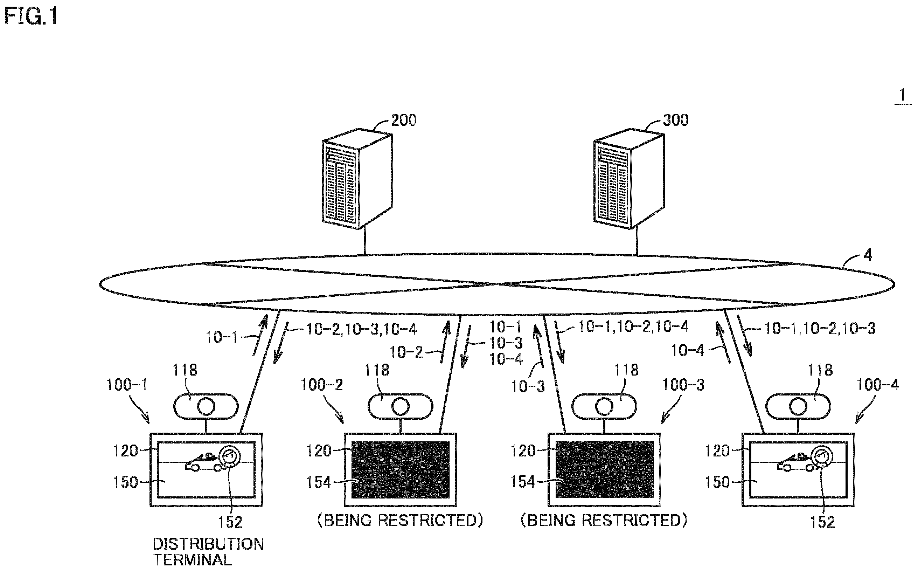

Referring to Fig. 1, an information processing system 1 includes one or more terminals 100. Terminal 100 is an exemplary computer. Fig. 1 shows an exemplary configuration of information processing system 1 including four terminals 100 connected to a network 4. When each of a plurality of terminals 100 should be specified in the description below, a sub number will be given for distinction (for example, terminals 100-1, 100-2, 100-3, and 100-4 shown in Fig. 1).

In information processing system 1, terminal 100 can join one or more communication groups (which will also be abbreviated as a "group" below). For participation of terminal 100 in at least one group, an account of a user who uses terminal 100 may be used, or identification information or the like of terminal 100 may be used.

Certain terminal 100 may be permitted to simultaneously belong to only a single group or to a plurality of groups. Processing in an example where a terminal belongs to one group will be described below by way of example. An upper limit may be set for the number of terminals 100 that can belong to each group.

Various types of information can be exchanged among terminals 100 belonging to the common group. Data exchanged among terminals 100 belonging to the common group is also referred to as "communication data 10."

Among terminals 100 belonging to the common group, a session corresponding to the group may be established. In other words, a plurality of terminals 100 belonging to the common group may have a common session. Communication data 10 may be transmitted and received in the common session.

Fig. 1 shows an example where terminals 100-1 to 100-4 belong to the common group by way of example. Terminal 100-1 is configured to transmit communication data 10-1 to one or more other terminals 100 and to receive communication data 10-2 to 10-4 transmitted by one or more other terminals 100. Terminals 100-2 to 100-4 transmit and receive communication data 10 similarly to terminal 100-1.

For example, communication data 10 transmitted by terminal 100 may include sound obtained by terminal 100, a camera image obtained by terminal 100, a game image outputted as a result of game processing performed in terminal 100, or the like.

Sound obtained by terminal 100 may include, for example, sound or the like of a user who uses terminal 100, the voice or the like being obtained with a microphone available at terminal 100. A camera image obtained by terminal 100 may be an image captured, for example, with a camera 118 or the like available at terminal 100. The image includes moving images and one or more still images. Sound may include not only voice but also ambient sound.

Users who use terminals 100 belonging to the common group can variously communicate based on communication data 10. Exchange of communication data 10 among terminals 100 belonging to the common group and relevant processing will also collectively be referred to as a "chat" below. For example, a chat using sound or a camera image among terminals belonging to the common group may be performed.

Information processing system 1 may include a management server 200 and a relay server 300. Management server 200 is responsible for processing for newly forming a group, processing for participation of one or more terminals 100 in a group, or the like. Relay server 300 is responsible for processing for relaying communication data 10 to be transmitted or received by one or more terminals 100, or the like. Management server 200 or relay server 300 may manage a session.

Management server 200 and relay server 300 may be implemented as a single physical server. Information processing system 1 may include a plurality of management servers 200 or may include a plurality of relay servers 300. Management server 200 and relay server 300 do not have to be separate in their function. Management server 200 and relay server 300 may be virtual servers.

A scheme to transmit communication data 10 from certain terminal 100 to one or more other terminals 100 may be a scheme to directly transmit communication data 10 to one or more other terminals 100 (for example, P2P or the like), in addition to or instead of a scheme to transmit data through one or more relay entities (for example, relay server 300).

From a point of view of prevention of an image of others from unintentionally being viewed, a point of view of protection of minors, or the like, display of a camera image may be restricted at terminal 100 in performing a chat or the like. For example, at terminal 100 where display of a camera image is restricted, at least display of a camera image captured by camera 118 corresponding to at least terminal 100 other than that terminal is restricted. Display at terminal 100 other than terminal 100 where display of the camera image is restricted, of the camera image captured by camera 118 corresponding to that terminal may also be restricted, or may be restricted separately based on setting. Display at terminal 100 where display of the camera image is restricted, of the camera image captured by camera 118 corresponding to that terminal may also similarly be restricted.

A game image outputted as a result of game processing may include a camera image. In such a case, for example, when certain terminal 100 transmits a game image including a camera image to terminal 100 where restriction on display has been set, the game image including the camera image may be shown at terminal 100 in spite of setting to restrict such display. Information processing system 1 in the present embodiment adopts an exemplary scheme to suppress such a situation.

Fig. 1 shows an example of transmission (which is also referred to as "distribution" below) of a game image 150 outputted as a result of game processing performed at terminal 100-1 to other terminals 100-2 to 100-4.

In an aspect where certain terminal 100 distributes an image or sound to another terminal 100, terminal 100 that distributes the image or sound will also be referred to as a "distribution terminal," and a terminal that receives the image or sound will also be referred to as a "reception terminal." Distinction between the distribution terminal and the reception terminal may be made for a designated image or sound. Therefore, each terminal 100 can serve as a distribution terminal and also as a reception terminal.

In a chat, game image 150 generated as a result of game processing performed in accordance with a user operation at at least one terminal 100 (distribution terminal) among a plurality of terminals 100 may be shown at at least another terminal 100 (reception terminal) among the plurality of terminals 100.

As will be described later, the distribution terminal may output game image data (which may be called a "game image") for showing game image 150 and predetermined information. These may be outputted in any manner, and by way of example, the predetermined information may be associated with the game image data. The predetermined information may be, for example, information indicating that a camera image is used in game image 150. When the reception terminal receives the game image data and the predetermined information from the distribution terminal, it may determine a manner of display of game image 150 based on the predetermined information. For example, when restriction on display of the camera image has been set at the reception terminal, the reception terminal may restrict display of the game image including the camera image. Fig. 1 shows exemplary restriction on display of a camera image as such.

Game image 150 distributed by terminal 100-1 which is the distribution terminal includes a camera image 152 obtained at terminal 100-1. Camera image 152 may be captured by camera 118 available at terminal 100-1 or may be obtained with another method.

At terminal 100-4 which is the reception terminal, restriction on display of the camera image has not been set. Therefore, at terminal 100-4, game image 150 transmitted by terminal 100-1 is shown as it is.

At terminal 100-2 and terminal 100-3 which are reception terminals, on the other hand, it is assumed that restriction on display of the camera image has been set. Therefore, at terminal 100-2 and terminal 100-3, the manner of display of game image 150 is different from the manner of display at terminal 100-1 and terminal 100-4.

By way of example, at terminal 100-2, the game image has been changed to a black image such that the entirety of game image 150 is substantially not shown. An image such as a black image or a white image in which contents are substantially indistinct will also be referred to as a "mute image" below. Game image 150 is thus shown in a manner changed to a mute image 154. Display is similar also at terminal 100-3.

### [B. Exemplary Hardware Configuration]

An exemplary hardware configuration of each apparatus included in information processing system 1 according to the present embodiment will now be described.

### (b1: Terminal 100)

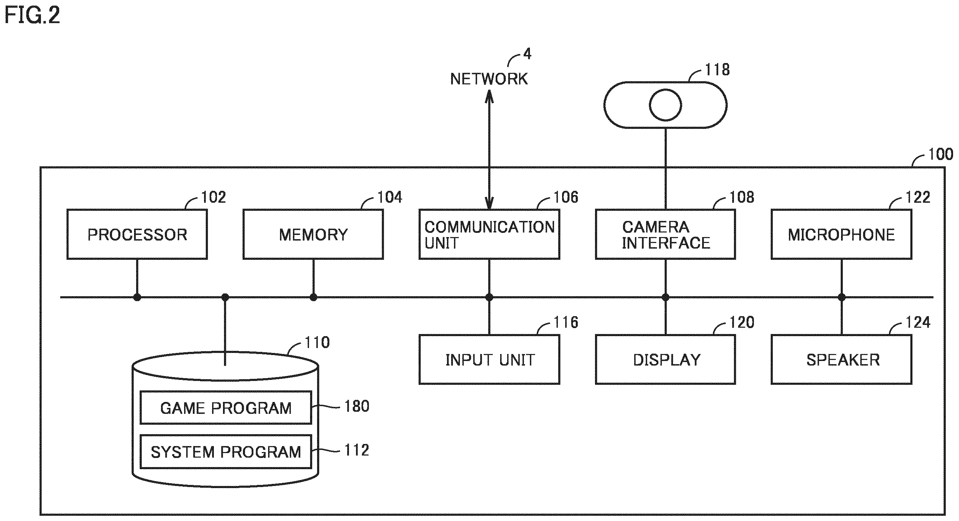

An exemplary hardware configuration of terminal 100 according to the present embodiment will be described with reference to Fig. 2. Terminal 100 is a kind of computer. Terminal 100 includes, for example, one or more processors 102, one or more memories 104, a communication unit 106, a camera interface 108, a storage 110, an input unit 116, a display 120, a microphone 122, and a speaker 124.

Processor 102 is a processing entity for performing processing in terminal 100. Processor 102 includes, for example, a central processing unit (CPU), a graphics processing unit (GPU), or the like. Processor 102 develops a program stored in storage 110 on memory 104 and executes the same.

Memory 104 is a volatile storage medium accessible by processor 102, and it includes, for example, a dynamic random access memory (DRAM), a static random access memory (SRAM), or the like.

Storage 110 is a non-volatile storage medium accessible by processor 102, and it includes, for example, a flash memory, a hard disk, or the like. Storage 110 may include, for example, a storage medium attachable to and removable from terminal 100, such as a cartridge or an optical disc.

For example, a system program 112 and a game application 180 are stored in storage 110.

System program 112 includes a computer readable instruction for hardware control of terminal 100, provision of a program execution environment, or the like. System program 112 may include a computer readable instruction necessary for performing a chat.

Game application 180 includes a computer readable instruction for execution of a game. A plurality of game applications 180 may be installed in terminal 100.

The term "processor" herein encompasses at least processing circuitry that performs processing in accordance with a computer readable instruction, such as a CPU or a GPU, and hard-wired circuitry such as an application specific integrated circuit (ASIC) or a field programmable gate array (FPGA).

The term "memory" herein encompasses at least memory 104 and storage 110.

In terminal 100, a system on chip (SoC) in which functions of the processor, the memory, and the like are integrated may be adopted. In this case, the processor and the memory are located at the same SoC (integrated circuit). Therefore, the terms "processor" and "memory" herein encompass configurations independent of each other and an integrated configuration.

Communication unit 106 transmits and receives data to and from another terminal 100, management server 200, relay server 300, or the like over network 4. Communication unit 106 may communicate data with another terminal 100 over the Internet as exemplary network 4. Network 4 may be a wireless network in conformity with Bluetooth^{®}, ZigBee^{®}, wireless LAN (IEEE 802.11), or the like.

Camera interface 108 mediates data transmission to camera 118 and data reception from camera 118. Connection of camera interface 108 to camera 118 may be wired connection or wireless connection.

Input unit 116 accepts a user operation. Input unit 116 includes, for example, a keyboard, a mouse, a game controller, a button, a cross-shaped key, and/or the like. Input unit 116 may be an interface with an apparatus (for example, a game controller) configured to accept a user operation. In other words, the apparatus configured to accept a user operation may be located outside terminal 100.

Display 120 shows an image or a video image generated as a result of processing by processor 102. Display 120 includes, for example, a liquid crystal display (LCD), an organic EL display, or the like. Display 120 may be located outside terminal 100. In this case, terminal 100 may include an interface circuit with display 120.

Microphone 122 is arranged at a housing or the like of terminal 100 and collects sound to generate an audio signal. Speaker 124 is arranged at the housing or the like of terminal 100 and generates sound from an audio signal. At least one of microphone 122 and speaker 124 may be located outside terminal 100.

Camera 118 generates camera image data (moving image data or still image data) resulting from image capture of a subject, in accordance with a command from terminal 100 or a predetermined condition.

Camera 118 includes an image capture element such as a charge-coupled device (CCD) image sensor or a complementary metal oxide semiconductor (CMOS) image sensor. A lens may be arranged in a stage preceding the image capture element.

Camera 118 may be, for example, a camera for video chat. Camera 118 may be a dedicated camera connectable only to a specific device or a general-purpose camera connectable to any device. A plurality of cameras 118 may be connectable to terminal 100.

Terminal 100 may include a camera. Terminal 100 does not have to include a microphone or a speaker, and these may be connectable to terminal 100.

A plurality of terminals 100 belonging to the common group do not have to be identical in hardware configuration. For example, at least one terminal 100 may be a dedicated game machine and another terminal 100 may be, for example, a personal computer, a television, a smartphone, a tablet, or the like where a game can be executed.

### (b2: Management Server 200)

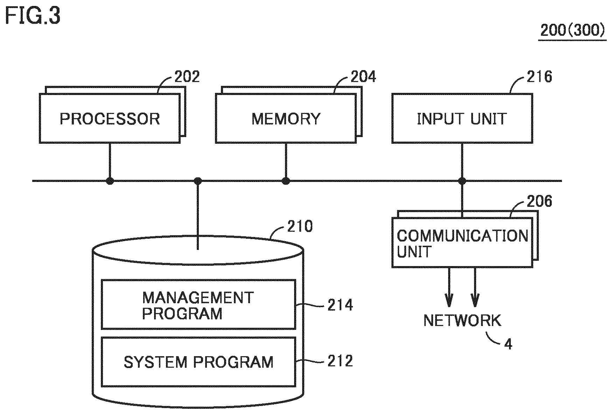

An exemplary hardware configuration of management server 200 according to the present embodiment will be described with reference to Fig. 3. Management server 200 includes, for example, one or more processors 202, one or more memories 204, one or more communication units 206, a storage 210, and an input unit 216.

Processor 202 is a processing entity for performing processing in management server 200. Processor 202 includes, for example, a CPU, a GPU, or the like. Processor 202 develops a program stored in storage 210 on memory 204 and executes the same.

Memory 204 is a volatile storage medium accessible by processor 202, and it includes, for example, a DRAM, a SRAM, or the like.

Storage 210 is a non-volatile storage medium accessible by processor 202, and it includes, for example, a hard disk, a flash memory, or the like. For example, a system program 212, a management program 214, and the like are stored in storage 210. Not-shown account information may be stored in storage 210.

System program 212 includes a computer readable instruction for hardware control of management server 200, provision of a program execution environment, or the like.

Management program 214 includes a computer readable instruction for performing processing involved with management for which management server 200 is responsible.

Communication unit 206 transmits and receives data to and from terminal 100, management server 200, or the like over network 4. Connection of communication unit 206 to network 4 may be wired connection or wireless connection.

Input unit 216 accepts a user operation. Input unit 216 includes, for example, a keyboard, a mouse, and/or the like.

### (b3: Relay Server 300)

Since relay server 300 is similar in exemplary hardware configuration to management server 200 shown in Fig. 3, detailed description will not be repeated.

A relay program stored in a storage of relay server 300 may include a computer readable instruction for transmitting and receiving and relaying communication data 10.

### [C. Exemplary Software Configuration of Terminal 100]

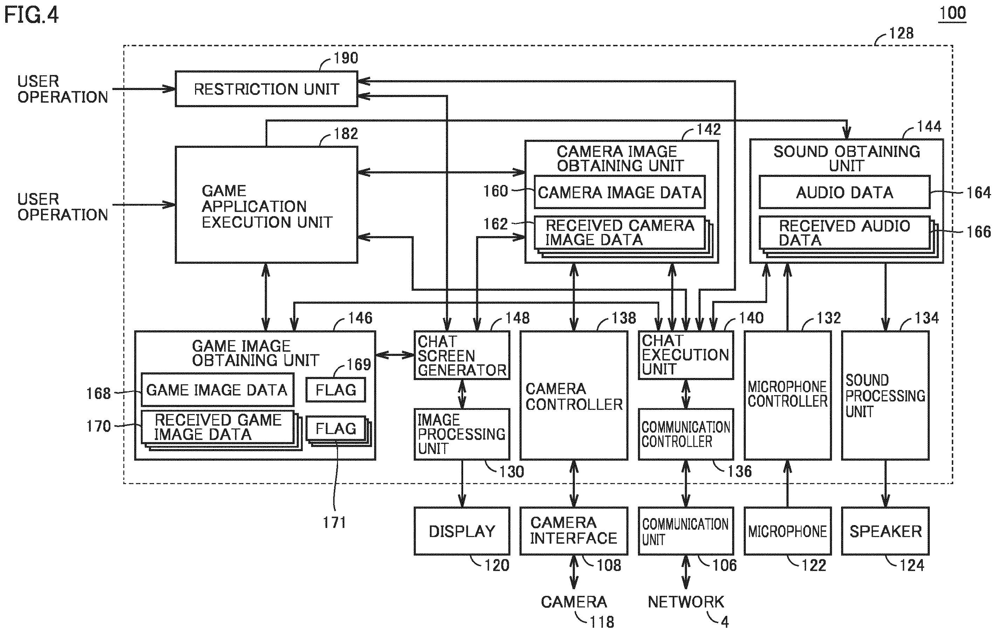

An exemplary software configuration of terminal 100 according to the present embodiment will now be described with reference to Fig. 4.

Terminal 100 includes a software module group 128. Software module group 128 may be implemented by execution of system program 112 and game application 180 by one or more processors 102.

Software module group 128 includes an image processing unit 130, a microphone controller 132, a sound processing unit 134, a communication controller 136, a camera controller 138, a chat execution unit 140, a camera image obtaining unit 142, a sound obtaining unit 144, a game image obtaining unit 146, a chat screen generator 148, and a restriction unit 190. Software module group 128 includes a game application execution unit 182.

Image processing unit 130 generates a video signal based on image data and outputs the generated video signal to display 120.

Microphone controller 132 generates audio data 164 from an audio signal outputted from microphone 122. Microphone controller 132 may change microphone 122 to a mute state.

Sound processing unit 134 generates an audio signal based on audio data and outputs the generated audio signal to speaker 124.

Communication controller 136 gives a command to communication unit 106 to control data communication with another terminal 100 or the like. When a chat is performed, communication controller 136 controls, in coordination with chat execution unit 140, data communication among a plurality of terminals 100 belonging to the common group, the plurality of terminals 100 including the subject terminal and another terminal 100.

Camera controller 138 generates camera image data 160 from a video signal outputted from camera 118. Camera controller 138 may be able to control start and stop or the like of image capture by camera 118, or to control a condition (a frame rate, white balance, or the like) for image capture by camera 118.

Chat execution unit 140 performs a chat. For example, chat execution unit 140 performs a chat using a camera image among the plurality of terminal 100.

Camera image obtaining unit 142 obtains a camera image captured by camera 118 corresponding to at least one terminal 100 belonging to the common group. Camera image obtaining unit 142 obtains camera image data 160 for showing a camera image captured at the subject terminal and received camera image data 162 which is camera image data from one or more other terminals 100 while the chat is being performed.

Sound obtaining unit 144 obtains sound corresponding to at least one terminal 100 belonging to the common group. Sound obtaining unit 144 obtains audio data 164 generated from sound collected by the subject terminal and received audio data 166 from one or more other terminals 100 while the chat is being performed.

Game image obtaining unit 146 obtains a game image corresponding to at least one terminal 100 belonging to the common group. Game image obtaining unit 146 obtains game image data 168 indicating a game image outputted from game application execution unit 182 of the subject terminal and received game image data 170 from one or more other terminals 100 while the chat is being performed. A camera use flag 169 may be associated with game image data 168. A camera use flag 171 may be associated with received game image data 170.

Game image data 168 and a camera use flag independent of camera use flag 169 may be associated with each other. Game image data 168 may include camera use flag 169 as a part of data. Association between game image data 168 and camera use flag 169 may be achieved by any implementation. The above description is applicable similarly also to received game image data 170 and camera use flag 171.

Game image data 168 may be the same as game image data which is outputted from game application execution unit 182 and to be used for display at display 120 of the subject terminal, or may be image data subjected to predetermined image processing (for example, lowering in resolution or the like).

Restriction unit 190 sets restriction on display of a camera image in accordance with a user operation or the like. Restriction on display may be at least a part of what is called parental control. For example, in an example where a specific account attempts to perform a chat, display of a camera image is restricted by default, and for display of the camera image, permission by an account that supervises the account is required. As described above, restriction on display may include restriction at the subject terminal, on display of a camera image captured by camera 118 corresponding to another terminal 100. Restriction on display may be set based on the user operation for each terminal 100 or each account associated with terminal 100.

Restriction on display for each terminal 100 or each account associated with terminal 100 may be set or canceled by management server 200 or the like. Terminal 100 may access management server 200 or the like as necessary to obtain whether restriction on display has been set at the subject terminal or a state of setting. Restriction unit 190 does not necessarily have to receive a user operation, but should only access management server 200 or the like to obtain whether restriction on display has been set or the state of setting.

Management server 200 or an external server may thus perform at least a part of processing involved with setting and cancellation of restriction on display.

Setting and cancellation of restriction on display may be based on an operation on input unit 116 of the subject terminal or based on operation by the user of any other terminal. For example, as a user who uses terminal 100 operates an external terminal associated with terminal 100 or an external terminal associated with an account of the user, restriction on display may be set or canceled.

The user may voluntarily set restriction on display, for example, in order to avoid display of a private image of others.

Restriction on display may be canceled on condition that a user who has predetermined authority gives approval. Restriction on display may be canceled for each group (session) in which a terminal has participated in. In this case, when terminal 100 participates in a new group, restriction on display is maintained in a set state in that new group. Alternatively, cancellation of restriction on display may be semi permanent. In this case, once restriction is canceled, restriction on display is maintained in a canceled state even when terminal 100 participates in a new group.

Game application execution unit 182 corresponds to running game application 180. Game application execution unit 182 executes a game in accordance with a user operation. Game application execution unit 182 outputs game image data 168 and audio data 164 as the game is executed. Game image data 168 may indicate not only a screen of a game being executed but also a menu screen, a setting screen, or the like.

Game application execution unit 182 may obtain at least one of a camera image (camera image data 160) captured by camera 118 corresponding to the subject terminal and a camera image (received camera image data 162) captured by camera 118 corresponding to another terminal and generate a game image (game image data 168) based on the obtained image data. When game application execution unit 182 generates a game image by using a camera image, it may output information (information based on camera use flag 169) indicating that the camera image is used in the game image.

In obtaining a game image, game application execution unit 182 may, for example, directly access camera image obtaining unit 142 or request chat execution unit 140 for obtainment of camera image data. By way of example, when chat execution unit 140 receives a request for obtainment of the camera image data, it may respond to game application execution unit 182 with identification information, an address, or the like for specifying the requested camera image data. Game application execution unit 182 may obtain target image data based on the identification information, the address, or the like. Game application execution unit 182 may thus obtain the camera image obtained while chat execution unit 140 is performing a chat.

Chat screen generator 148 generates a screen for a chat (which is also referred to as a "chat screen" below) at the subject terminal, by using at least one of camera image data 160, received camera image data 162, game image data 168, and received game image data 170. Chat screen generator 148 may determine the manner of display at the subject terminal, of a game image (received game image data 170) at another terminal, based on setting of restriction on display and information on the game image (camera use flag 171).

### [D. Exemplary Game Processing]

Exemplary game processing in terminal 100 will now be described. Game processing which will be described below may be performed independently of a chat. As the game processing is performed while the chat is being performed, a game image generated in the game processing can be distributed to another terminal 100 and camera images captured at one or more other terminals 100 can be used in the game processing.

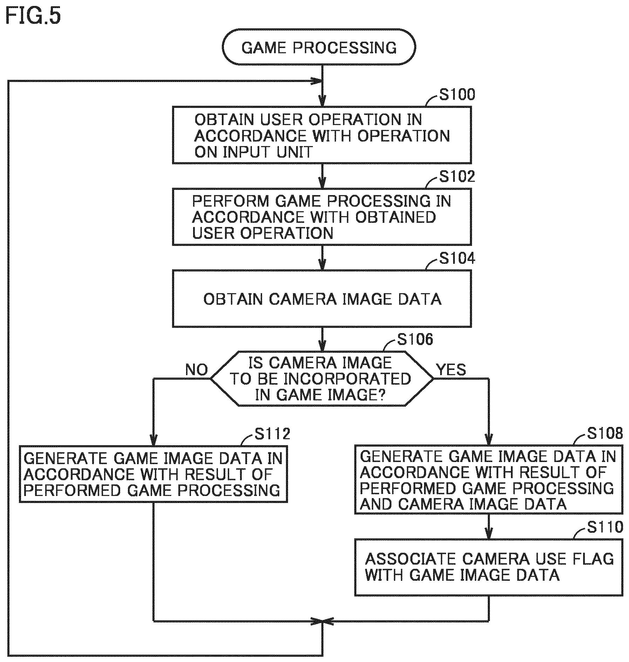

Exemplary game processing in terminal 100 according to the present embodiment will be described with reference to Fig. 5.

Game application execution unit 182 obtains a user operation in accordance with an operation on input unit 116 (step S100) and performs the game processing in accordance with the obtained user operation (step S102). Game application execution unit 182 obtains camera image data 160 from camera image obtaining unit 142 (step S104).

Game application execution unit 182 determines whether or not the camera image is to be incorporated in the game image in accordance with a result of performed game processing (step S106). For example, when a player object of an opponent (for example, a car of the opponent in a racing game) is included in the game image while a communication game is being executed, it may be determined that the camera image of the opponent is also to be incorporated.

When the camera image is to be incorporated in the game image in accordance with the result of the performed game processing (YES in step S106), game application execution unit 182 generates the game image in accordance with the result of the performed game processing and the camera image data (step S108). Game application execution unit 182 then associates camera use flag 169 set, for example, to "1" with game image data 168 (step S110). Game application execution unit 182 thus sets camera use flag 169 when using the camera image.

When the camera image is not to be incorporated in the game image in accordance with the result of the performed game processing (NO in step S106), game application execution unit 182 generates the game image in accordance with the result of the performed game processing (step S112). At this time, in the present embodiment, camera use flag 169 is not associated with game image data 168. Camera use flag 169 set to a value other than "1" may be associated with game image data 168. Camera image data 160 obtained in step S104 may be discarded.

Processing in steps S100 to S112 is repeated until the game processing ends.

An exemplary case of setting by game application execution unit 182, of camera use flag 169 to "1" is not limited to the above. In other examples, camera use flag 169 is set to "1" when game application execution unit 182 obtains camera image data 160 from camera image obtaining unit 142 regardless of whether or not the camera image is to be incorporated in the game image, always during execution of a game mode in which the camera image may be incorporated in the game image, always during execution of a game application in which the camera image may be incorporated in the game image, or the like. Whether or not to associate camera use flag 169 set to "1" with game image data 168 may be determined by game application execution unit 182, or may be set in advance by an application developer for each scene, for example, to set the camera use flag to "1" in a specific game scene.

### [E. Exemplary Chat Processing]

Exemplary chat processing (data transmission and data reception) by chat execution unit 140 will now be described.

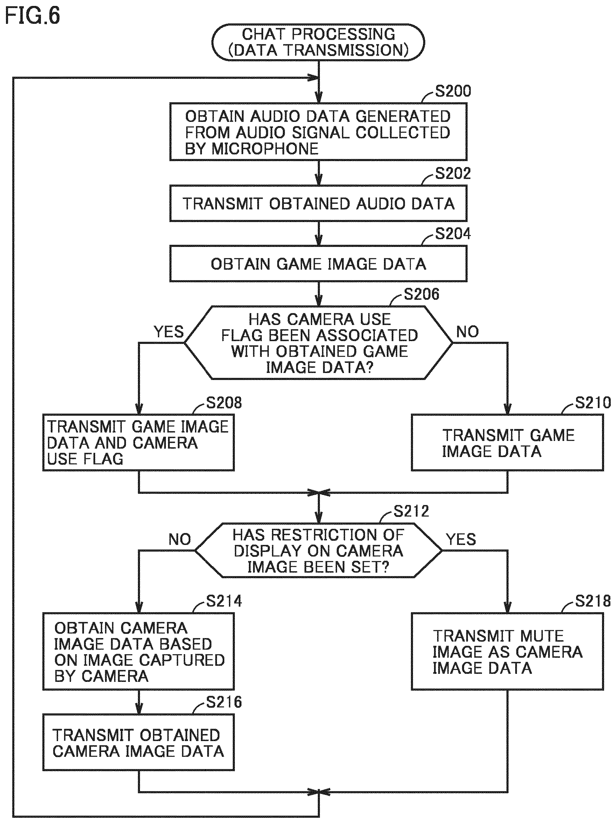

Referring to Fig. 6, chat execution unit 140 obtains audio data 164 generated from an audio signal collected by microphone 122 (step S200) and transmits obtained audio data 164 (step S202).

Chat execution unit 140 obtains game image data 168 (step S204) and determines whether or not camera use flag 169 has been associated with obtained game image data 168 (step S206).

When camera use flag 169 has been associated with game image data 168 (YES in step S206), chat execution unit 140 transmits game image data 168 and camera use flag 169 (step S208).

When camera use flag 169 has not been associated with game image data 168 (NO in step S206), chat execution unit 140 transmits game image data 168 (step S210).

In the present embodiment, when restriction on display of the camera image has been set at one terminal, not only display of the camera image received by the one terminal is restricted but also display at another terminal, of the camera image captured at the one terminal is restricted. Chat execution unit 140 determines whether or not restriction on display of the camera image has been set (step S212). When restriction on display of the camera image has not been set (NO in step S212), chat execution unit 140 obtains camera image data 160 based on the image captured by camera 118 (step S214) and transmits obtained camera image data 160 (step S216). Camera image data 160 may include the entire image captured by camera 118 or only a part of the image.

When restriction on display of the camera image has been set (YES in step S212), chat execution unit 140 transmits a mute image as camera image data 160 (step S218). Chat execution unit 140 does not have to transmit the camera image data.

While terminal 100 belongs to at least one group, processing in steps S200 to S218 is repeated.

In a modification, when camera use flag 169 has not been associated with game image data 168 (NO in step S206), camera use flag 169 set to "0" (or, for example, "FALSE") may be transmitted.

In a modification, when restriction on display of the camera image has been set (YES in step S212), camera image data 160 does not have to be transmitted.

Cycles of transmission of audio data 164, game image data 168, and camera image data 160 do not have to be identical to one another. At least a part of audio data 164, game image data 168, and camera image data 160 may be, for example, a data stream in conformity with the H.264 (MPEG-4 AVC) standard.

In transmission of game image data 168 and camera use flag 169 as the data stream in conformity with H.264, data processing as below may be performed.

The stream data in conformity with the H.264 standard is a series of data referred to as a network abstraction layer (NAL) unit. The NAL unit can broadly be categorized into a video coding layer (VCL)-NAL unit including video image information and a non-VCL-NAL unit not including video image information. The VCL-NAL unit may include one of a key frame (a frame not subjected to interframe compression) and a differential frame (a delta frame).

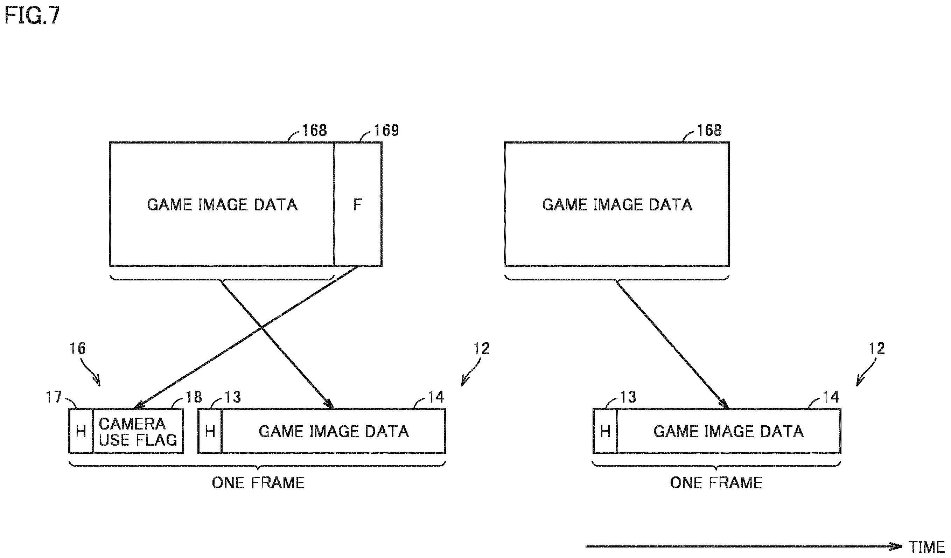

Exemplary processing of game image data 168 and camera use flag 169 in terminal 100 according to the present embodiment will be described with reference to Fig. 7.

In exemplary association of camera use flag 169 with game image data 168, when game image data 168 includes camera use flag 169, camera use flag 169 is removed from game image data 168, and then a VCL-NAL unit 12 including game image data 168 is generated. VCL-NAL unit 12 is transmission data, and includes game image data as a payload 14 in addition to a header 13. A non-VCL-NAL unit 16 indicating removed camera use flag 169 is also generated. Non-VCL-NAL unit 16 is also transmission data, and includes a camera use flag as a payload 18 in addition to a header 17. VCL-NAL unit 12 and non-VCL-NAL unit 16 may constitute one frame of data. Communication unit 106 of terminal 100 may thus transmit a data stream based on the game image and camera use flag 169.

When game image data 168 does not include camera use flag 169, on the other hand, VCL-NAL unit 12 is generated from game image data 168 as it is. VCL-NAL unit 12 is transmission data, and includes game image data as payload 14 in addition to header 13. In this case, VCL-NAL unit 12 constitutes one frame of data.

When game image data 168 does not include camera use flag 169, non-VCL-NAL unit 16 where payload 18 is null or "0" may be generated. In other words, regardless of whether or not game image data 168 includes camera use flag 169, VCL-NAL unit 12 and non-VCL-NAL unit 16 may constitute one frame of data. When camera use flag 169 associated with game image data 168 is "0", non-VCL-NAL unit 16 does not have to be generated.

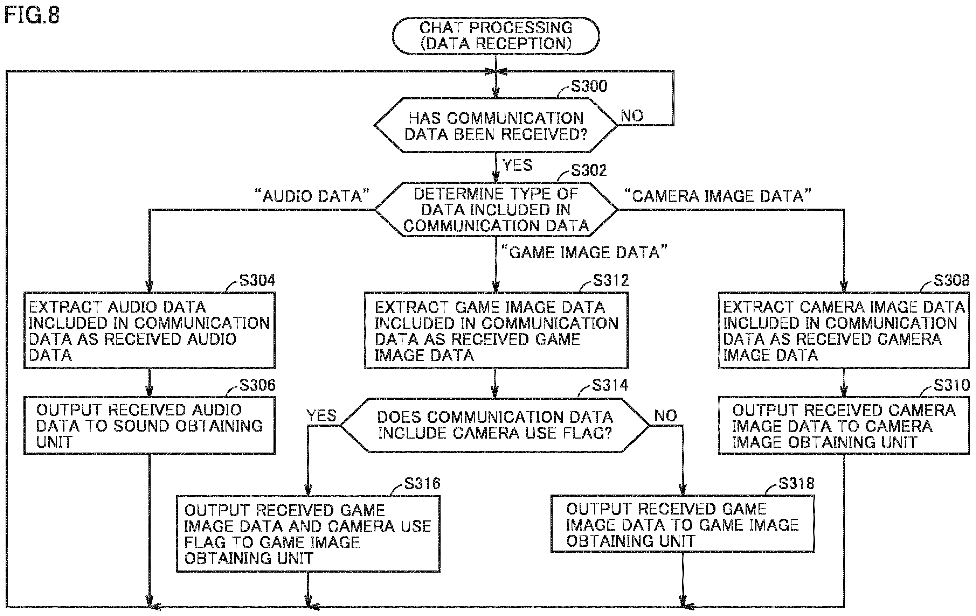

Referring to Fig. 8, when chat execution unit 140 receives communication data 10 (YES in step S300), it determines a type of data included in communication data 10 (step S302).

When communication data 10 includes audio data ("audio data" in step S302), chat execution unit 140 extracts the audio data included in communication data 10 as received audio data 166 (step S304) and outputs received audio data 166 to sound obtaining unit 144 (step S306).

Sound obtaining unit 144 may successively output one or more pieces of obtained received audio data 166 to sound processing unit 134. Sound received from one or more terminals 100 is thus outputted from speaker 124 in a mixed state. In other words, the user of terminal 100 can listen to sound transmitted from one or more other terminals 100.

When communication data 10 includes camera image data ("camera image data" in step S302), chat execution unit 140 extracts the camera image data included in communication data 10 as received camera image data 162 (step S308) and outputs the camera image data to camera image obtaining unit 142 (step S310).

When communication data 10 includes game image data ("game image data" in step S302), chat execution unit 140 extracts the game image data included in communication data 10 as received game image data 170 (step S312). Chat execution unit 140 determines whether or not communication data 10 includes the camera use flag (step S314). In the present embodiment, determination is made that non-VCL-NAL unit 16 including, for example, "1" as the camera use flag in the payload is included in the data stream relating to the received game image.

When the communication data includes the camera use flag (YES step S314), chat execution unit 140 outputs received game image data 170 and camera use flag 171 to game image obtaining unit 146 (step S316). Camera use flag 171 is associated with received game image data 170.

When the communication data does not include the camera use flag (NO in step S314), chat execution unit 140 outputs received game image data 170 to game image obtaining unit 146 (step S318).

While terminal 100 belongs to at least one group, processing in steps S300 to S318 is repeated.

When audio data or image data are transmitted in an interframe compressed state, processing for data decompression may be performed. A result of modification or processing of the camera image data included in communication data 10 may be outputted as received camera image data 162, and a result of modification or processing of the game image data included in communication data 10 may be outputted as received game image data 170.

In a modification, when the communication data does not include the camera use flag (NO in step S314), camera use flag 171 set to "0" (or, for example, "FALSE") may be outputted together with received game image data 170 to game image obtaining unit 146.

### [F. Exemplary Processing in Chat Screen Generator 148]

Exemplary generation of a chat screen by chat screen generator 148 will now be described.

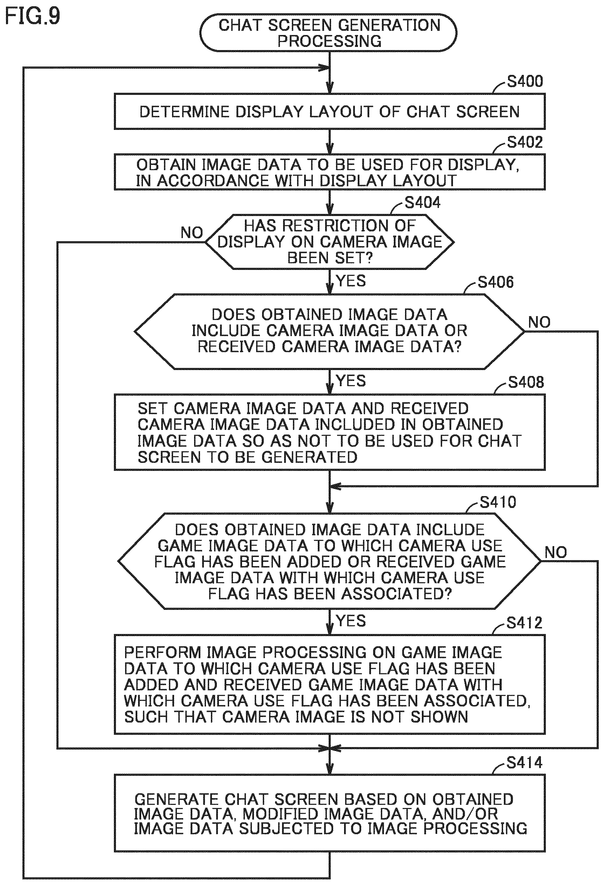

Referring to Fig. 9, chat screen generator 148 determines a display layout of a chat screen (step S400). The display layout of the chat screen may include, for example, information on a type, a display position, a display size, or the like of image data to be used for display.

Chat screen generator 148 obtains image data to be used for display in accordance with the display layout (step S402).

Chat screen generator 148 determines whether or not restriction on display of the camera image has been set (step S404). When restriction on display of the camera image has not been set (NO in step S404), processing in step S414 is performed.

When restriction on display of the camera image has been set (YES in step S404), chat screen generator 148 determines whether or not the obtained image data includes camera image data 160 or received camera image data 162 (step S406).

When the obtained image data includes camera image data 160 or received camera image data 162 (YES in step S406), chat screen generator 148 sets camera image data 160 and received camera image data 162 included in the obtained image data so as not to be used for a chat screen to be generated (step S408). Camera image data 160 and received camera image data 162 may be changed to mute image data, or may be discarded. Alternatively, processing for blurring away the camera image may be performed, or change to an image showing a message "display is prohibited" may be made.

When the obtained image data does not include camera image data 160 or received camera image data 162 (NO in step S406), processing in step S408 is skipped.

Chat screen generator 148 determines whether or not the obtained image data includes game image data 168 with which camera use flag 169 has been associated or received game image data 170 with which camera use flag 171 has been associated (step S410).

When the obtained image data includes game image data 168 with which camera use flag 169 has been associated or received game image data 170 with which camera use flag 171 has been associated (YES in step S410), chat screen generator 148 performs image processing on game image data 168 with which camera use flag 169 has been associated and received game image data 170 with which camera use flag 171 has been associated, such that the camera image is not shown (step S412). The image processing for not showing the camera image will be described later. Camera use flag 171 associated with received game image data 170 may be or may not be identical as data to the camera use flag associated with received game image data 170 by the terminal that has transmitted received game image data 170. In any case, the reception terminal can be concluded as determining the manner of display of received game image data 170 based on setting of restriction on display of the camera image at the reception terminal and the camera use flag outputted from a transmission terminal.

The reception terminal thus determines the manner of display of received game image data 170 distributed by the distribution terminal based on setting of restriction on display of the camera image and camera use flag 171. An image in accordance with the determined manner of display may be generated by chat screen generator 148 or image processing unit 130 of the reception terminal.

When the obtained image data does not include game image data 168 with which camera use flag 169 has been associated and received game image data 170 with which camera use flag 171 has been associated (NO in step S410), processing in step S412 is skipped. Processing in step S414 is then performed.

In step S414, chat screen generator 148 generates the chat screen based on the obtained image data, the modified image data, and/or the image data subjected to image processing (step S414). A video signal corresponding to the generated chat screen is outputted to display 120.

While display of the chat screen is active, processing in steps S400 to S414 is repeated.

In a modification, in step S412, rather than image processing for not showing the camera image, for example, the received game image data may be processed simply not to be shown, or may be discarded.

In a modification, when restriction on display of the camera image has been set at the subject terminal, obtainment of camera image data 160 by game application execution unit 182 may be restricted. With such restriction, game application execution unit 182 is substantially unable to use the camera image, and hence, in steps S410 and S412, only received game image data 170 may be subjected to processing.

### [G. Exemplary Chat Screen]

An exemplary chat screen generated in information processing system 1 according to the present embodiment will now be described.

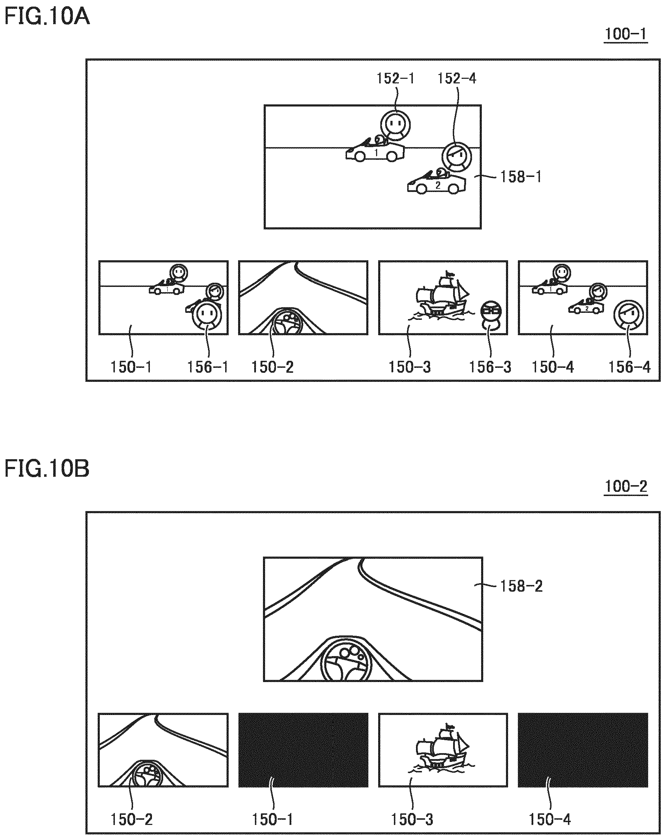

An exemplary premise is that terminals 100-1 to 100-4 belong to the common group and each of terminals 100-1 to 100-4 is distributing the game image. At terminals 100-1, 100-3, and 100-4, restriction on display of the camera image has not been set, but at terminal 100-2, restriction on display of the camera image has been set. Terminals 100-1, 100-3, and 100-4 are distributing the camera images captured at the terminals, respectively. Furthermore, a communication game is being executed between terminal 100-1 and terminal 100-4, and game images outputted by terminal 100-1 and terminal 100-4 also include the camera images captured by the cameras corresponding to terminal 100-1 and terminal 100-4, respectively. Fig. 10A shows an exemplary chat screen of terminal 100-1 and Fig. 10B shows an exemplary chat screen of terminal 100-2.

In the exemplary chat screen of terminal 100-1 shown in Fig. 10A, a game image 158-1 outputted as a result of the game processing being performed at terminal 100-1 is shown, and game images 150-2, 150-3, and 150-4 based on received game image data 170 distributed by respective terminals 100-2, 100-3, and 100-4 are shown. Game image 150-1 corresponds to the game image data distributed by terminal 100-1 and it is an image similar to game image 158-1. Game image 150-1 and game image 158-1 may be different from each other, for example, in quality or frame rate.

Since restriction on display of the camera image has not been set at terminal 100-1, distributed received game image data 170 is shown as it is as game images 150-2 to 150-4, regardless of whether or not the game images include the camera images.

Camera images 156-1, 156-3, and 156-4 distributed by terminals 100-1, 100-3, and 100-4 are shown superimposed on game images 150-1, 150-3, and 150-4, respectively.

The camera image (camera images 152-1 and 152-4 in the example in Fig. 10A) used in the game image may be the same as the camera image (camera images 156-1 and 156-4 in the example in Fig. 10A) used in the chat. In this case, both of the camera images share the same representation.

The camera image used in the game image and the camera image used in the chat may have different visual representations. For example, the camera image used in the game image is an image including only a face of a user, and the camera image used in the chat may be an image of a general view including a background captured by the camera.

In an example where the camera image is used in the game image, the camera image may be prevented from being superimposed on the game image.

Since restriction on display of the camera image has been set at terminal 100-2, on the other hand, terminal 100-2 is not distributing the camera image and the camera image is not superimposed on game image 150-2. When the camera image is not being distributed, an alternative icon, a message indicating that a camera image is not being distributed, or the like may be shown at a position where the camera image is to be superimposed.

In the exemplary chat screen at terminal 100-2 shown in Fig. 10B, on the other hand, game image 158-2 outputted as a result of the game processing being performed at terminal 100-2 is shown, and game images 150-1, 150-3, and 150-4 based on received game image data 170 distributed by respective terminals 100-1, 100-3, and 100-4 are shown. Game image 150-2 corresponds to the game image data distributed by terminal 100-2, and it is similar to game image 158-2.

Since the game image distributed by each of terminal 100-1 and terminal 100-4 includes the camera image, at terminal 100-2 where restriction on display of the camera image has been set, the mute image is shown as each of game image 150-1 and game image 150-4.

Since the game image distributed by terminal 100-3 does not include the camera image, on the other hand, the game image distributed by terminal 100-3 is shown as game image 150-3. Unlike game image 150-3 shown in Fig. 10A, at terminal 100-2 where restriction on display of the camera image has been set, camera image 156-3 is not superimposed. When restriction on display of the camera image has been set, a mute image, a message indicating that restriction on display of the camera image has been set, or the like may be shown at a position where the camera image is to be superimposed.

In each game image (the image distributed by the distribution terminal) in the chat screen, an account image or an account name indicating an account of the transmission terminal may be shown superimposed on each game image or in the vicinity of each game image, regardless of whether or not the mute image is being shown.

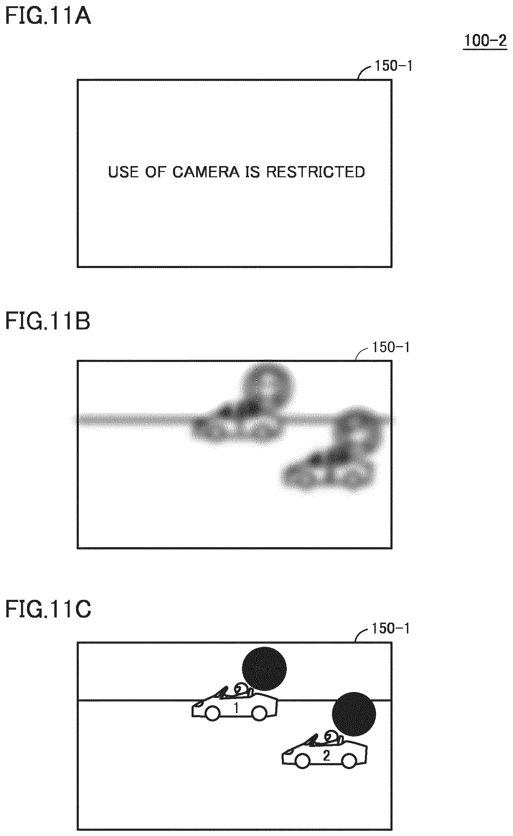

In the exemplary chat screen described above, an example where the mute image is shown as the game image is shown by way of example of the manner in which the camera image is indistinct. Another manner in which the camera image is indistinct is illustrated below with reference to Figs. 11A to 11C.

Figs. 11A to 11C show other exemplary display of game image 150-1 included in the chat screen at terminal 100-2 shown in Fig. 10B. The images shown in Figs. 11A to 11C may be generated in image processing in step S412 in Fig. 9.

As shown in Fig. 11A, for example, text "use of camera is restricted" or an image notifying that use of the camera is restricted may be shown.

As shown in Fig. 11B, for example, a blurred game image may be shown.

As shown in Fig. 11C, a game image in which the camera image included in the game image has been changed to the mute image may be shown. Normally, at the reception terminal, a position and a range of the camera image included in received game image data 170 distributed by the distribution terminal cannot be specified. Therefore, for example, the distribution terminal may transmit two types of image data for showing game image 150-1 shown in Fig. 10A and game image 150-1 shown in Fig. 11C. The reception terminal may determine which image data is to be used for display.

For example, when the distribution terminal knows that restriction on display of the camera image has been set at at least one reception terminal based on information from management server 200 or the reception terminal, the distribution terminal may transmit two types of image data. Alternatively, when at least the camera image is included in the game image, the distribution terminal may always transmit two types of image data for a terminal where restriction on display of the camera image has been set and a terminal otherwise. Instead of the game image shown in Fig. 11C, a game image originally including no camera image may be transmitted.

The distribution terminal may show the game image including the camera image on the screen thereof, whereas it may use as a game image to be transmitted, another game image such as an image not including the camera image.

When restriction on display of the camera image has been set at the distribution terminal, it may transmit the game image (for example, game image 150-1 shown in Fig. 11C) in which the camera image included in the game image has been changed to the mute image.

Alternatively, the distribution terminal may transmit data indicating a position or a size of the camera image in the game image. The reception terminal may generate the mute image that covers the camera image based on the data and may superimpose the mute image on the game image.

The manners of display shown in Figs. 11A to 11C are by way of example, and any manner of display may be adopted so long as the camera image is indistinct.

Thus, when restriction on display of the camera image has been set at a certain terminal 100, determination not to show the game image (received game image data 170) at another terminal 100 or to show the game image in such a manner that at least the included camera image is indistinct may be made based on camera use flag 171.

Though description is given with attention being paid to a single game image for the sake of convenience of description, the reception terminal can also receive game image data from a plurality of distribution terminals and show chat screens based on the received game image data in any layout. Therefore, a manner of display different for each received piece of game image data may be set.

### [H. Modification]

Though exemplary processing in which terminal 100 determines the manner of display and generates an image in accordance with the determined manner of display is shown in the description above, management server 200 or relay server 300 may be responsible for at least a part of the processing. For example, in an example where the camera use flag has been associated with game image data from at least one distribution terminal and restriction on display has been set at the reception terminal which is a destination of distribution, relay server 300 may distribute the mute image, rather than the received game image data, in relaying the game image data.

Though a configuration in which independent terminal 100 is connected over the network is illustrated by way of example in the description above, at least one terminal 100 may be a virtual processing entity. For example, at least one terminal 100 may be a virtual machine on the cloud. All terminals 100 may be virtual machines on the cloud, or at least one of functions of terminal 100 may be performed with the use of processing resources on the cloud.

From another point of view, at least one of image processing unit 130, microphone controller 132, sound processing unit 134, communication controller 136, camera controller 138, chat execution unit 140, camera image obtaining unit 142, sound obtaining unit 144, game image obtaining unit 146, chat screen generator 148, and restriction unit 190 may be implemented by processing resources on the cloud. Alternatively, at least one function of each component may be performed by using the processing resources on the cloud.

At least a part of the game processing may be performed by using an external resource such as a server other than terminal 100.

Processing for incorporating the camera image in the game image may include not only processing for simply superimposing the camera image on the game image but also game processing in which the camera image acts on an object in a game. For example, such processing as recognizing a motion of a user's arm in a camera image and causing the user shown as the camera image in the game to throw a ball may be performed.

The game image and predetermined information may separately be outputted from the distribution terminal. For example, the game image and the camera use flag may be distributed as separate streaming data. Alternatively, the game image data may be distributed as streaming data, whereas the camera use flag which is exemplary predetermined information may be transmitted to the server or the reception terminal only at the timing of switching.

The camera use flag may be set not by game application execution unit 182 (game application 180) but by system program 112 or chat execution unit 140. For example, system program 112 or chat execution unit 140 may set the camera use flag based on the fact that camera image obtaining unit 142 has game application execution unit 182 obtain the camera image.

Though the camera use flag is exemplified as exemplary predetermined information for determining the manner of display of received game image data 170 received by the reception terminal, any information may be used. The predetermined information should only be information to be used together with setting of restriction on display of the camera image in determination of the manner of display of game image 150 at the reception terminal. For example, game application execution unit 182 may set the predetermined flag to "1" in using a screen shot image or an image obtained from a moving image distribution service as the game image. In other words, the predetermined information may be irrelevant to whether or not the game image includes or may include the camera image.

The predetermined information is not limited to the flag. The predetermined information is not limited, for example, to information indicating one of two values.

The reception terminal does not have to determine the manner of display of received game image data 170. For example, the server (management server 200 or relay server 300) may determine the manner of display of received game image data 170 for each reception terminal based on setting of restriction on display of the camera image for each reception terminal.

Restriction on transmission of the camera image and restriction on display of the received game image may individually be set or only one restriction may be set.

Restriction on display of the camera image in a chat screen and restriction on transmission of the camera image during chat processing/display of the camera image to be superimposed on the game image may individually be set.

Though an example of restriction on display of the camera image during chat processing (chat screen) is illustrated, a scene where display of the camera image is restricted is not limited as such. For example, restriction on display of the camera image in the game image may be set independently of a chat function. Alternatively, for example, at the terminal, display of the camera image may always be restricted. Restriction on display of the camera image may be set regardless of whether the terminal is off-line or on-line.

In the exemplary chat screens shown in Figs. 10A and 10B, terminal 100-1 corresponding to game image 150-1 and terminal 100-4 corresponding to game image 150-4 that are performing a chat execute the same communication game and each of the terminals shows the camera image of the each terminal and the camera image of the counterpart terminal. Thus, while the chat is being performed and the same communication game is being executed, the camera image may be incorporated in the game image only between the users who are executing the communication game. "The communication game being the same" may be determined, for example, based on identification information specific to a game application. For example, when the game application obtains the camera image at the reception terminal, the system may obtain identification information of the game application and obtain identification information of a game application running in a terminal of a chat counterpart. The system may then specify the terminal that is executing the same game application and may allow the game application running in the reception terminal to obtain the received camera image received from the terminal. Then, the game application may have the obtained received camera image shown in the game image.

The game application may obtain the camera image to be shown, also from a terminal that is executing not only "the same communication game" but also a communication game in the same series or a predetermined game. By way of example, a system of the reception terminal may obtain identification information of the game application running in the distribution terminal, specify the identification information associated with the game application (or the obtained identification information), and allow the game application running in the reception terminal to obtain the camera image captured at the distribution terminal that is executing the game application corresponding to the specified identification information. An "associated ID" may be, for example, one or more pieces of identification information set in advance by a system manager for identification information of a specific game application or an ID based on a predetermined rule such as "the same ID except for a last sign." The "one or more pieces of identification information set in advance by a system manager" may be held by somewhere in information processing system 1, and may be held, for example, by game application execution unit 182 of the reception terminal, management server 200, or game application execution unit 182 of the distribution terminal.

Regardless of whether or not the game applications running in terminals are the same, the terminals belonging to the common group may be able to obtain and show the camera images captured at the terminals. For example, the user of terminal 100-1 shown in Figs. 10A and 10B may be executing a communication game with a user different from a user belonging to the group corresponding to a chat, and game image 150-1 may include a camera image of an opponent of the game. In this case, the game image including the camera image of the opponent not belonging to the group corresponding to the chat may be distributed in the chat. These examples may be applied also to obtainment of sound in the chat by a game application.

In the exemplary chat screens shown in Figs. 10A and 10B, terminal 100-1 corresponding to game image 150-1 and terminal 100-4 corresponding to game image 150-4 are executing the same communication game. Terminal 100-1 may execute the game and terminal 100-4 may transmit operation data (and the camera image) to terminal 100-1 and receive a screen showing a result of execution of the game from terminal 100-1, so that game play as if terminal 100-4 executed the game can be realized. At this time, game image 150-1 and game image 150-4 may be the same as or different from each other. In the latter case, game image 150-1 and game image 150-4 may each be generated. Alternatively, when terminal 100-4 receives from terminal 100-1, the game image with which the camera use flag has been associated, it may distribute the game image in the chat, with the camera use flag being associated therewith.

Similar processing may be performed also on sound. The game application may incorporate sound obtained from microphone 122 in game sound. For example, when game sound includes sound obtained from microphone 122, the game application may set the flag and the reception terminal may restrict output of game sound based on the flag and setting of restriction on use of the microphone therein.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. An information processing method comprising:
performing data communication (106) among a plurality of terminals (100-1 to 100-4) belonging to a common group, the plurality of terminals comprising a first terminal and a second terminal;
obtaining (S104; S308; S312; S402) a camera image captured by a camera corresponding to at least one terminal belonging to the common group;
setting, at the second terminal, in accordance with a user operation, restriction (190) on display of a camera image captured by a camera corresponding to at least a terminal other than the second terminal;
performing game processing (S100 to S112) in accordance with a user operation at the first terminal and outputting a first game image and first information; and
determining (S404 to S414) a manner of display of the first game image at the second terminal based on the setting of restriction on display and the first information.

2. The information processing method according to claim 1, wherein
the first game image (158; 150) is configured to be generated using a first camera image (152; 156) captured by a first camera corresponding to at least the first terminal.

3. The information processing method according to claim 2, wherein
the performing game processing comprises setting a flag (169; 171) when using the first camera image, and
the first information is based on the flag.

4. The information processing method according to any of claims 1 to 3, wherein
while the game processing is being performed, a camera image (152) captured by a camera corresponding to a terminal in the common group other than the first terminal is obtainable, and
the first game image is configured to be generated using the obtained camera image.

5. The information processing method according to any of claims 1 to 4, further comprising performing (140) a chat using the camera image among the plurality of terminals, wherein
the setting restriction on display comprises restricting use of the camera image in performing the chat.

6. The information processing method according to claim 5, further comprising obtaining (S214; S308) the camera image while the chat is being performed, wherein
the game processing being performed is configured to obtain the camera image obtained in the chat.

7. The information processing method according to claim 5 or 6, further comprising showing (S208; S210; S312; S316; S318; S414) a game image generated as a result of game processing performed in accordance with a user operation at at least one terminal among the plurality of terminals, at at least another terminal among the plurality of terminals.

8. The information processing method according to any of claims 1 to 7, wherein
the first terminal comprises a first communication unit, and the first terminal is configured to transmit to the second terminal, a data stream (12) based on the first game image and the first information.

9. The information processing method according to claim 8, wherein
when image data of the first game image comprises a flag, the data stream comprises data (14) generated from the image data with the flag having been removed and data (18) indicating the removed flag.

10. The information processing method according to claim 8 or 9, wherein
the data stream is in conformity with an H.264 (MPEG-4 AVC) standard.

11. The information processing method according to claim 8 or 9, wherein
when restriction on display of the camera image has been set at the second terminal, the manner of display of the first game image based on the first information
avoiding showing the first game image including the camera image; or
showing (S408, S412, S414) the first game image such that at least the camera image is indistinct.

12. An information processing system (1) configured to perform the information processing method according to any of claims 1 to 11.

13. An information processing method comprising:
obtaining (S312) a game image and first information, the game image being outputted as a result of game processing performed by another terminal belonging to a common group;
obtaining (S104; S308; S312; S402) a camera image captured by a camera corresponding to at least one terminal belonging to the common group;
setting, at a terminal, in accordance with a user operation, restriction (190) on display of a camera image captured by a camera corresponding to at least a terminal other than the terminal; and
determining (S404 to S414) a manner of display of the game image at the terminal based on the setting of restriction on display and the first information.

14. A terminal (100) configured to perform the information processing method according to claim 13.

15. A program (112) causing one or more computers to perform the information processing method according to claim 13.
